# EUROPEAN PATENT APPLICATION

(11) **EP 1 666 233 A1**
(43) Date of publication of application: **07.06.2006**
(21) Application number: 04028418.4
(22) Date of filing: 01.12.2004
(51) Int. Cl.: B29C 65/36

(54) **Inductive welding process for the assembly of thermoplastic parts**

(71) Applicant: Delphi Technologies, Inc., Troy, MI 48007 (US)
(72) Inventor: Habay, Andre, 54260 Longuyon (FR)
(74) Representative: de Zeeuw, Johan Diederick

(57) **Abstract**

The present invention relates to a method for welding a first plastic object (1) to a second plastic object (2) comprising the steps of:
- providing a metal object (4) at the interface between the first (1) and second (2) plastic object,
- heating the metal object (4) by means of induction, in order to thereby melt plastic at the interface, and
- cooling of the melted plastic in order to create a weld at the interface between the first (1) and second (2) plastic object, wherein the metal object (4) is formed as a metal web or cloth, in order to create a relatively large contact area between the object and the plastic to be melted.

## Description

The present invention relates to a method for welding a first plastic object to a second plastic object comprising the steps of providing a metal object or a metal containing object at the interface between the first and second plastic object and heating the metal object by means of induction in order to thereby melt the plastic at the interface, and cooling off the melted plastic in order to create a weld at the interface between the first and second plastic object.

It is known to assemble two or more thermoplastic objects by means of inductive welding. According to the prior art a plain metallic core is placed in the welding area of the two objects. The welding is obtained through inductive heating of the metallic core. In order to be able to generate the heat in the welding zone the assembly of plastic objects and the metal core is placed in a magnetic field. The heat generated by induction in the metallic core is transferred from the metallic core to the surrounding plastic material, which is eventually melted. The melted the plastic from the first and second object is forced to mix and to fill a cavity by controlled pressure applied on the two objects.

The objects to be assembled, in general, are designed such that one object in the welding zone comprises a groove or femal part wherein the metallic core is positioned and in that the other part fits inside the groove on top of the metallic core.'

A first disadvantage of the method according to the prior art is the fact that by using a metal core, for instance shaped as a ring, a limited interface between the plastic and the metal is formed. That means that there is a limited area for transferring heat from the metal part to the surrounding plastic material. The poor thermal conductivity of the metal-plastic system leads to a potential degradation of the plastic at the interface. This limits the possible power to be used in the welding process and therefore the time needed for obtaining the weld might be considerable.

A further disadvantage is the fact that, after a weld is formed between the first and second object the presence of the metal core will lead to a poor cohesion of the assembly at a welded zone because of the weak metal-polymer cohesion. Especially in the case of thermal cycling of the welded object. This results from very different coefficients of thermal expansion that will exist between the thermal plastic and the metal core.

It is a first object of the present invention to overcome the disadvantages of the prior art and to improve the quality of a weld, to be formed by means of inductive welding, between a first and a second plastic object.

This object, according to the present invention is achieved in that the metal object is formed as a metal web or cloth, in order to create a relatively large interface between the object and the plastic to be melted.

The effect of this measure is that in the welding area there will be a large metal-polymer interface to transfer heat generated in the metal to the surrounding polymer. Because of the fact that the metal object has the form of a web or cloth, the metal object does not obstruct the flow of melted material from a first side of the metal object to the other side thereof. As soon as the melted material is cooled off, a wide polymer-polymer interface is created in the welding area. For a given effective section of the welding, a relatively large polymer-polymer interface can be obtained.

In the present description the wording "metal web or cloth" is used. It should be understood that for the invention any appropriate metallic woven cloth, screen or web could be used. The metal web or cloth could be obtained by using metal wire, wherein the web is formed for instance by means of a weaving or braiding process.

The effect of having a woven structure enhances the flexibility of the metal web or cloth. That means that it is easy to shape the metal web or cloth into the required design. The web or cloth can be shaped by forcing the web to wrap the object to the assembled. In case the metal web or cloth is wrapped between the surfaces to be connected, a uniform heat generation all along the interface between the objects can be obtained. The flexibility of the metal web or cloth further leads to an important freedom in the design of the weld zone shape. Moreover, the flexibility of the metal web or cloth will limit the cost of manufacturing of the metal web or cloth, especially for complex joins design.

According to the present invention it is possible that the web or cloth is enclosed in a third plastic object, adapted to be positioned between the first and second plastic object.

Because of this measure it is possible to introduce material which can be used in order to form the weld between the first and the second plastic object.
The metal web or cloth is enclosed in a thermoplastic matrix. In this case the metal web or cloth could consist of short steel fibers. These steel fibers with the thermoplastic matrix form a composite material. The composite could be manufactured by compounding and be useable in a standard injection moulding.

An injection moulded part made of a compound of thermoplastic material and short steel fibers presents a certain level of electric conductivity as an interconnection between the steel fibers can be reached under specific moulding conditions. The adjustment of the electric, magnetic fields and power will allow sufficient heating during the welding process, even with limited interconnection between the steel fibers. The advantage of using such an injection moulded core is that a welding material is brought with the core and completely welded through induction as the steel fibers are homogeneously dispersed in the matrix.
Additionally, the heat generated by the induction is well spread inside the material in the entire volume of the core, compared to the traditional method where all the heat is to be conducted from the surface of the core through a limited area of the plastic. A better bonding of the assembly is expected as the polymer interface between the assembled parts will be much wider. The method according to the present invention will lead to a better control of the filling of the cavity between the two objects without having to fully control the displacement of the parts during assembly.

Injection moulding of thermoplastic is generally less expensive and more flexible in terms of design than the machining of steel plain cores. The amount and the dimension of the steel fibers can be adjusted to suit various situations.

According to the present invention it is possible that the metal web or cloth comprises steel.

Moreover it is possible that the first and second object comprise any of the following materials: PA66; PET; PBT; POM; PPE; PE; PA6; PP; PEI; PPS or PPA.

According to a further aspect of the present invention the present application relates to a composite core, especially adapted to be used in any of the methods according to the present invention, wherein the composite core comprises a thermoplastic matrix and metal fibers.

Below, the invention will be explained in detail with reference being made to the drawings. The drawings are only intended to illustrate the invention and not to limit its scope, which is only defined by the dependent claims.

Figure 1 shows in cross section an assembly of a first plastic object and a second plastic object to be joined together by induction welding, according to the prior art.

Figure 2 shows the assembly of a first and a second plastic object according to figure 1, to be joined together using induction welding, according to the present invention.

Figure 3 shows a possible embodiment of the web according to the present invention.

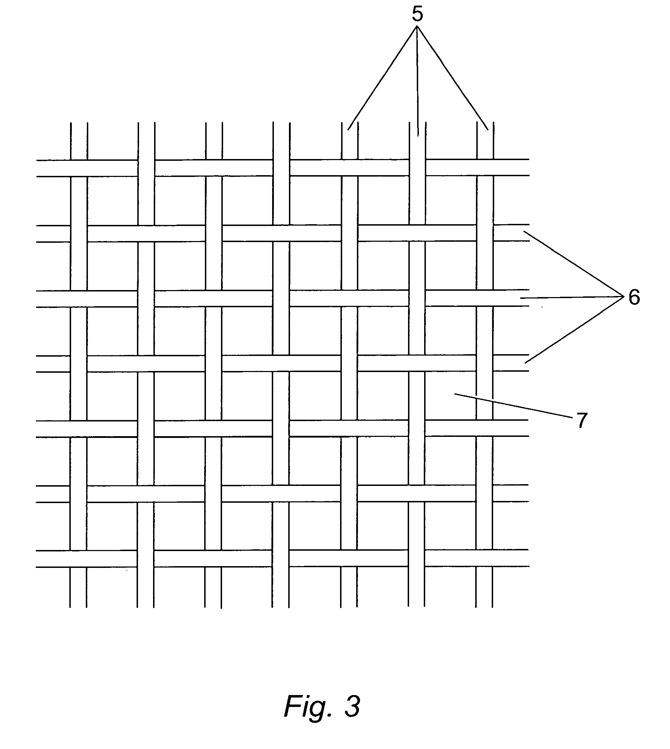

Figure 3 shows schematically a composite core to be used for inductive welding according to the present invention.

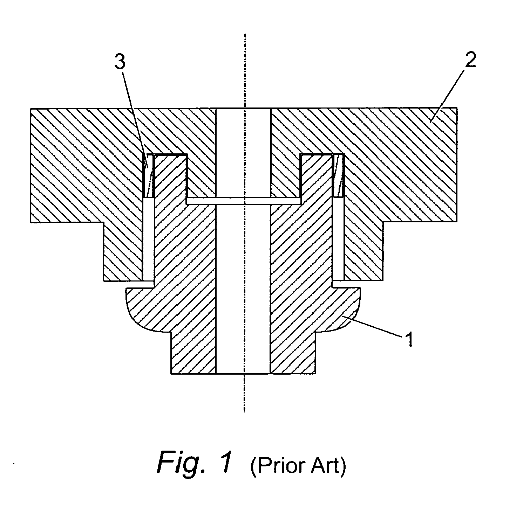

Figure 1 shows in cross section a first object 1 and a second object 2 to be connected by means of inductive welding. In order to be able to provide heat at the interface between the object 1 and the object 2, a metal core 3 is provided between respective objects 1 and 2. The core 3 according to figure 1 is a massive ring for instance formed from steel. The assembly of objects 1 and 2, and the ring 3 is positioned in an induction welding apparatus in order to introduce heat in the assembly via the metallic core 3. The heat generated in the cores will be transferred from the metal to the surrounding material of both the first object 1 and the second object 2. The melted material from both objects 1 and 2 will be mixed together and form a weld between object 1 and object 2 once the material is cooled off and solidified. Once the weld between the objects 1 and 2 is formed the metal core 3 remains in place. That means that at the interface between the parts 1 and 2 there is a relatively large metal-polymer interface. Because of the important differences in thermal dilatation of the polymer and the metal, the metal-polymer interface will prove to have a poor cohesion of the assembly at the welded zone.

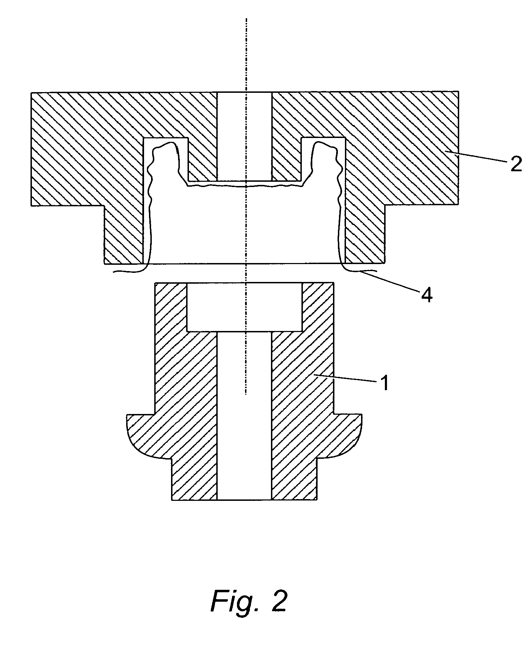

Figure 2 shows in cross section objects 1 and 2 according to figure 1 which are to be welded by means of inductive welding using a metal cloth or web 4. The metal core or web 4 is relatively flexible and can be folded in order to fit the interface between parts 1 and 2. As shown in figure 2, the metal web or cloth is able to cover the bigger part of the interface between the objects 1 and 2.

Figure 2 shows a web with no holes in the centre. The web can be formed by stamping, leaving the centre part of the web free.

When the assembly of parts 1, 2 and 4 is introduced in an inductive welding apparatus, heat will be generated over the full length of the web or cloth 4. That means that the area to transfer heat from the metal part 4 to the respective parts 1 and 2 will be much larger than the corresponding surface according to the assembly according to figure 1.

A possible embodiment of the metal web or cloth 4 is shown in figure 3. Figure 3 shows a web that is created by weaving steel wires 5 and 6, which are separated by a certain distance in order to create meshes 7 between the wires. A typical web could be a standard screen with 20 mesh, preferably having classical waves. One of the advantages of the embodiment according to figure 3 is the fact that the web as such is very flexible and easy to shape. The meshes between the metal wires provide openings for allowing plastic material to flow from one side of the web to the other side of the web.

As soon as a weld is formed using the method according to the present invention between the plastic parts 1 and 2 a wide polymer to polymer interface is formed. Contrary to the prior art the presence of the metal web or cloth 4 will not create the zone with poor cohesion of the assembly in the welded area.

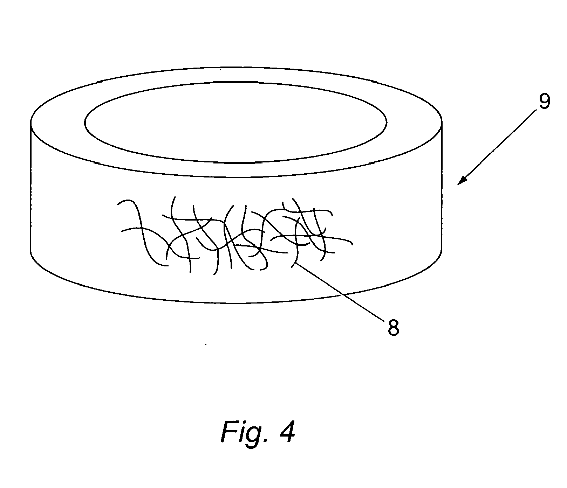

The web or cloth 4 as shown in figure 2 could also have the form of a bundle of metal fibres 8, which are enclosed in a polymer as shown in figure 4. The device according to figure 4 is ring shaped and can be positioned between a first and a second object. The metal fibres 8 are at least partly connected in order to allow current to flow through the fibres. Because of the fact that the fibres are homogeneously distributed over the composite, heat is easily transferred to the polymer material and the melted material of the object 9 can easily be used to form a weld between the objects 1 and 2.

## Claims

1. Method for welding a first plastic object (1) to a second plastic object (2) comprising the steps of:
- providing a metal object (4) at the interface between the first (1) and second (2) plastic object,
- heating the metal object (4) by means of induction, in order to thereby melt plastic at the interface, and
- cooling of the melted plastic in order to create a weld at the interface between the first (1) and second (2) plastic object,
**characterized in that**,
- the metal object (4) is formed as a metal web or cloth, in order to create a relatively large contact area between the object (4) and the plastic to be melted.

2. Method according to claim 1, wherein the metal web or cloth comprises a metal wire.

3. Method according to claim 1 or 2, wherein the metal web or cloth is formed by means of weaving or braiding.

4. Method according to one of the claims 1-3, wherein the web or cloth is enclosed in a third plastic object, adapted to be positioned between the first and second object.

5. Method according claims 4, wherein the material of the third object is similar to the material of the first and second object.

6. Method according to one of the claims 1-5, wherein the metal web or cloth comprises steel.

7. Method according to any of the claims 1-6, wherein the first and second object comprise any of the following materials: PA66; PET; PTB; POM; PPE; PE; PA6; PP; PEI; PPS or PPA.

8. Method according to any of the claims 4-7, wherein the third plastic object is formed by means of injection moulding.

9. Composite core (9), specially adapted to be used in any of the methods 4-8, **characterized in that**, the composite core (9) comprises a thermal plastic matrix and metal fibers (8), the fibers (8) being at least partly inter-connected to allow currents to flow through the fibers (8).

10. Plastic object, comprising a first (1) and a second (2) part joined together by means of inductive welding, **characterized in that**, the plastic object comprises a metal web or cloth (4) at the interface between the first (1) and second (2) part.
